# EUROPÄISCHE PATENTSCHRIFT

(11) **EP 1 094 965 B1**
(45) Veröffentlichungstag und Bekanntmachung des Hinweises auf die Patenterteilung: **05.02.2003**
(21) Anmeldenummer: 99964474.3
(22) Anmeldetag: 12.06.1999
(51) Int. Cl.: B62D 5/04, B62D 6/00

(54) **ELEKTRISCH UNTERSTÜTZTE HILFSKRAFTLENKUNG FÜR KRAFTFAHRZEUGE**
ELECTRICALLY ASSISTED POWER STEERING SYSTEM FOR MOTOR VEHICLES
DIRECTION ELECTRIQUEMENT ASSISTEE DESTINEE A DES VEHICULES

(30) Priorität: 19.06.1998 DE 19827344
(43) Veröffentlichungstag der Anmeldung: 02.05.2001
(73) Patentinhaber: ZF Lenksysteme GmbH, 73522 Schwäbisch Gmünd (DE)
(72) Erfinder: RIEGER, Wolfgang, D-73072 Donzdorf (DE)
(86) Internationale Anmeldenummer: EP9904072
(87) Internationale Veröffentlichungsnummer: WO00013957

(56) Entgegenhaltungen:
- EP-A- 0 109 085
- EP-A- 0 407 716
- EP-A- 0 788 964
- EP-A- 0 872 395
- DE-A- 3 343 180
- DE-A- 4 112 738
- DE-A- 19 651 968
- PATENT ABSTRACTS OF JAPAN vol. 199, no. 709, 30. September 1997 (1997-09-30) & JP 09 113524 A (YNS), 2. Mai 1997 (1997-05-02)

## Beschreibung

Die Erfindung betrifft eine elektrisch unterstützte Hilfskraftlenkung für Kraftfahrzeuge nach dem Oberbegriff des Anspruches 1. Die Hilfskraftlenkung enthält eine Eingangswelle, die mit einem Lenkhandrad in Wirkverbindung steht und die zur Übertragung eines für das Lenken von zu lenkenden Rädern erforderlichen Drehmomentes dient. Ein Ausgangsglied steht mit den zu lenkenden Rädern in Wirkverbindung. Ein Elektromotor, durch den eine Hilfskraft auf die Eingangswelle oder das Ausgangsglied ausgeübt werden kann, ist an der Hilfskraftlenkung angeordnet. Zum Erfassen der Richtung und der Stärke eines auf die Eingangswelle wirkenden Lenkdrehmomentes und anderer lenkungsspezifischer Parameter dient eine Erfassungseinheit. Eine Elektronikeinheit dient zum Verarbeiten der lenkungsspezifischen Parameter und zum Steuern des Elektromotors.

Eine derartige elektrisch unterstützte Hilfskraftlenkung ist beispielsweise bekannt aus der DE C2 44 07 729. Bei dieser Hilfskraftlenkung wird ein Elektromotor über eine elektronische Steuereinheit in Abhängigkeit von einem Drehmoment gesteuert.

Weiterhin ist eine Servolenkeinrichtung für Kraftfahrzeuge in der EP A2 788 964 beschrieben, die einen elektrischen Motor, einen Lenkmomentensensor und eine Steuerung aufweist, durch welche abhängig vom Lenkmoment eine Solldrehzahl berechnet und als Steuersignal an den Motor übermittelt wird. In einer Klassifikationsschaltung werden Klassifikationssignale, die die Betriebsgrößen des Kraftfahrzeuges charakterisieren, erzeugt und bei der Regelung des Solldrehmomentes berücksichtigt. Die Erfassung solcher Betriebsgrößen, wie Fahrstil des Fahrers, Radkraftschlussbeiwert und Straßentyp ist eine momentane Messwerterfassung.

Herkömmliche hydraulische oder elektro-hydraulische Lenksysteme werden mit Hilfe der Ventilkennlinien-Charakteristik auf jede einzelne Fahrzeugausführung abgestimmt. Der Verlauf dieser Ventilcharakteristik bestimmt im Zusammenhang mit der Fahrwerkkonzeption, der Achskinematik, der Elastokinematik und der Auslegung der Chassis-Komponenten
(z. B. Feder-, Dämpfer-Charakteristik) zu wesentlichen Teilen das Lenk- und Fahrverhalten des Fahrzeugs.

In der Entwicklungsphase jedes Fahrzeugs wird deshalb eine ideale Ventilkennlinie, die sogenannte "Nominalkennlinie", gemeinsam vom Fahrzeug- und Lenkungshersteller ermittelt.

Ventilbauteile bekannter hydraulischer und elektrohydraulischer Lenksysteme lassen sich jedoch nicht toleranzfrei fertigen. Deshalb akzeptiert man notgedrungen bei diesen Systemen ein Fertigungsstreuband der Ventilkennlinie, das "Toleranzband", das üblicherweise symmetrisch um die "Nominalkennlinie" herum angeordnet ist.

Die Fahrzeughersteller bieten für ein Fahrzeugmodell eine breite Palette unterschiedlicher Ausstattungsvarianten an. Dazu gehören beispielsweise unterschiedliche Motorisierungen, die gewöhnlich zu erheblich unterschiedlichen Vorderachslasten führen. Derartige unterschiedliche Vorderachslasten müßten im Idealfall zu unterschiedlichen Lenkungs-Nominalkennlinien führen. Dies wird jedoch meist aus Gründen der Variantenvielfalt und der zu hohen Kosten nicht umgesetzt.

Ein weiterer Einfluß auf die Gestaltung des Nominalkennlinien-Verlaufes einer Servolenkung geht von der Reifencharakteristik des Fahrzeuges aus. Im Normalfall wird jedoch die Ventilkennlinie nur auf eine durchschnittliche Reifencharakteristik eines aktuellen Reifentyps abgestimmt.

Wird - beispielsweise bei einer Ersatzbeschaffung - der ursprüngliche Reifen durch einen Reifen mit anderer Charakteristik ersetzt, so kann sich dadurch die Lenkcharakteristik erheblich ändern. Hier wird der Fahrer das Lenkverhalten als nicht zufriedenstellend empfinden.

Aus der DE 196 51 986 ist ein Regelsystem für ein Fahrzeug mit gummibereiften Rädern bekannt, das über eine Regeleinheit verfügt, der eine Eingabeeinheit zugeordnet ist, über welche reifencharakteristische Größen der am Fahrzeug verwendeten Reifen in die Regeleinheit eingebbar sind. Es werden Fahrzeugkennwerte erfasst, die überwiegend für das Beschleunigungs- und Abbremsverhalten des Fahrzeuges geeignet sind.

Der Erfindung liegt die Aufgabe zugrunde, eine gattungsgemäße, elektrisch unterstützte Hilfskraftlenkung dahingehend zu verbessern, daß bei unterschiedlichen Ausstattungsvarianten eines Fahrzeuges immer zufriedenstellende Lenkcharakteristiken erreicht werden.

Diese Aufgabe wird durch die elektrisch unterstützte Hilfskraftlenkung nach Anspruch 1 gelöst.

Zweckmäßige und vorteilhafte Ausgestaltungen der Erfindung sind in den Unteransprüchen angegeben.

Wenn die Kennwerte für die jeweils vorhandene Ausstattungsvariante des Fahrzeugs Werte für die spezifische Vorderachslast des Fahrzeugs enthalten, dann kann die Lenkcharakteristik an unterschiedliche Fahrzeugmotoren angepaßt werden.

Zusätzlich oder alternativ zu den Kennwerten für die spezifische Vorderachslast des Fahrzeugs können die Kennwerte für die jeweils vorhandene Ausstattungsvariante des Fahrzeugs Werte für die Reifencharakteristik des Fahrzeugs enthalten. Dadurch können unterschiedliche Reifentypen und -größen bei der Festlegung der Lenkcharakteristik berücksichtigt werden. Die Werte für die Reifencharakteristik können dabei Angaben über die Reifenschräglauf-Steifigkeit und/oder das Kraft-Verformungsverhalten und/oder Kennwerte für bestimmte Reifentypen enthalten.

Die Kennwerte für die jeweils vorhandene Ausstattungsvariante des Fahrzeugs können beispielsweise durch eine Barcode-Kennung in die Erkennungseinheit eingelesen werden. Zweckmäßigerweise ist eine Fahrzeugexterne Erkennungseinheit beim Fahrzeughersteller in einem Bandende-Rechner (Montageband-Programmiereinheit), zusätzlich in Stützpunkt-Werkstatt-Testern vorhanden.

Im folgenden wird die Erfindung anhand eines in der Zeichnung dargestellten Ausführungsbeispieles näher erläutert. Die einzige Figur zeigt den Aufbau einer elektrisch unterstützten Hilfskraftlenkung in schematischer Darstellung.

Die elektrisch unterstützte Hilfskraftlenkung enthält in dem dargestellten Ausführungsbeispiel ein Lenkgetriebe in der Form einer Zahnstangenlenkung 1. Eine solche Zahnstangenlenkung ist allgemein bekannt und wird deshalb nicht näher beschrieben. Ein nicht dargestelltes Ritzel der Zahnstangenlenkung trägt eine Eingangswelle 2, die - beispielsweise über eine mit Kreuzgelenken versehene Lenksäule 3 - mit einem Lenkhandrad 4 in Wirkverbindung steht. Anstelle einer Zahnstangenlenkung kann auch ein anderes Lenkgetriebe, beispielsweise eine Kugelmutterlenkung, verwendet werden.

Eine nicht dargestellte Zahnstange der Zahnstangenlenkung 1 bildet zusammen mit zwei Lenkschubstangen 5 und 6 ein Ausgangsglied, das mit nicht dargestellten, zu lenkenden Rädern in Wirkverbindung steht. Die Zahnstange bildet außerdem das Abtriebsteil der Lenkung.

Mit einer solchen Hilfskraftlenkung kann ein Lenkdrehmoment von dem Lenkhandrad 4 zu den zu lenkenden Rädern übertragen werden.

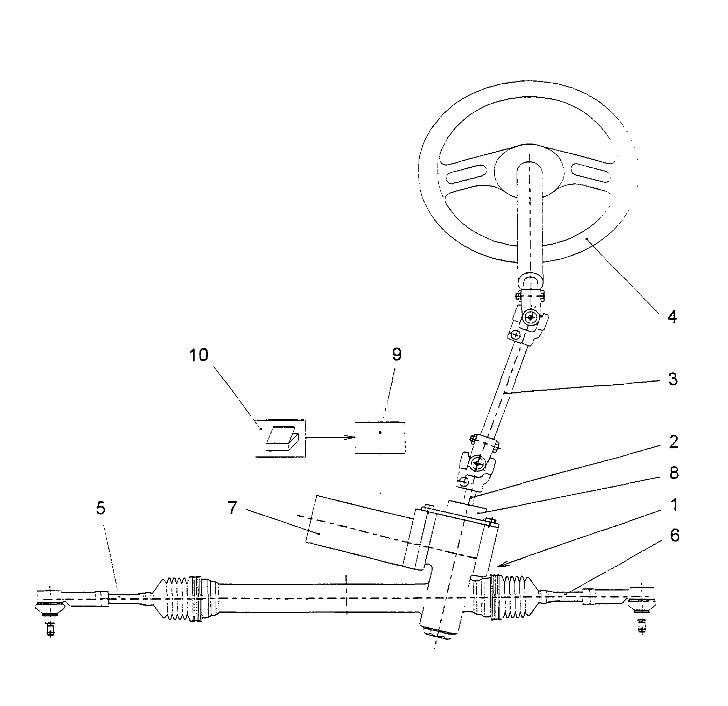

Durch einen Elektromotor 7 kann eine Hilfskraft auf die Eingangswelle 2 ausgeübt werden. In dem Ausführungsbeispiel nach Fig. 1 ist der Elektromotor 7 derart angeordnet, daß seine Achse senkrecht zu der Achse der Eingangswelle 2 und damit des Ritzels steht. Seine Achse kann auch unter einem anderen Winkel zur Achse der Eingangswelle stehen, beispielsweise unter einem Winkel von 60° bis 130°.

Mit gleicher oder ähnlicher Wirkung kann der Elektromotor 7 derart angeordnet werden, daß seine Achse parallel zu der Achse der Eingangswelle 2 und damit des Ritzels oder eines anderen Teiles der Lenksäule 3 angeordnet ist.

In den beiden bisher beschriebenen Anordnungsarten des Elektromotors 7 wirkt dieser auf die Eingangswelle 2 und das Ritzel der Zahnstangenlenkung 1. Ebenso kann der Elektromotor 7 derart angeordnet werden, daß seine Achse parallel oder unter einem Winkel oder koaxial zu der Achse der Zahnstange der Zahnstangenlenkung 1 liegt.

Eine Erfassungseinheit 8 dient zum Erfassen der Richtung und der Stärke eines auf die Eingangswelle 2 wirkenden Lenkdrehmomentes und anderer lenkungsspezifischer Parameter. In dem Ausführungsbeispiel ist die Erfassungseinheit 8 an der Eingangswelle 2 angeordnet. Sie kann jedoch auch an anderen Stellen der Lenkung vorgesehen werden.

Zum Verarbeiten der lenkungsspezifischen Parameter und zum Steuern des Elektromotors 7 dient eine Elektronikeinheit 9.

Erfindungsgemäß ist eine Erkennungseinheit 10 vorgesehen, zum Ermitteln von Kennwerten, die die Lenkcharakteristik beeinflussen für mehrere mögliche Ausstattungsvarianten des Fahrzeugs wobei die Lenkcharakteristiken mehrerer unterschiedlicher Ausstattungsvarianten eines Fahrzeuges in der Elektronikeinheit 9 abgelegt werden und bei Bedarf die passende Lenkcharakteristik für die jeweils vorhandene Ausstattungsvariante des Fahrzeuges aktivierbar wird zum angepaßten Steuern des Elektromotors 7. Damit kann die Lenkcharakteristik an die entsprechende Fahrzeug-Ausstattungsvariante angepaßt werden. Auf diese Weise kann allein über den in der Software der Elektronikeinheit 9 fixierten Regelalgorithmus ein genau der Nominalkennlinie" entsprechender Verlauf der Lenkcharakteristik erzeugt werden. Im Unterschied zu bekannten Hydrolenkungssystemen muß hier kein Fertigungsstreuband für die Kennung hingenommen werden.

Zweckmäßigerweise enthalten die Kennwerte für die jeweils vorhandene Ausstattungsvariante des Fahrzeugs Werte für die spezifische Vorderachslast des Fahrzeugs, durch die z. B. unterschiedliche Motorvarianten berücksichtigt werden können.

Zur Berücksichtigung unterschiedlicher Reifentypen, die auf ein und dasselbe Fahrzeug im Laufe der Lebensdauer des Fahrzeugs montiert werden können, werden die Werte für die Reifencharakteristik erfaßt. Diese Werte enthalten beispielsweise Angaben über die Reifenschräglauf-Steifigkeit, das Kraft-Verformungsverhalten und/oder Kennwerte für bestimmte Reifentypen. Dabei können mehrere verschiedene Reifenausführungen, deren wichtigste Fahreigenschaften vergleichbar sind, in charakteristischen Gruppen zusammengefaßt werden.

Die Kennwerte für die jeweils vorhandene Ausstattungsvariante des Fahrzeugs können beispielsweise durch eine Barcode-Kennung in die Erkennungseinheit eingelesen werden. Dabei sind beispielsweise unterschiedliche Barcode-Kennungen unterschiedlichen Motorvarianten oder Reifentypen zugeordnet.

Eine Fahrzeugexterne Erkennungseinheit 10 ist zweckmäßigerweise beim Fahrzeughersteller in einem Bandende-Rechner (Montageband-Programmiereinheit), zusätzlich in Stützpunkt-Werkstatt-Testern vorhanden. Die Kennwerte werden dann über die dafür vorgesehene Fahrzeugschnittstelle in die Elektronikeinheit 9 eingelesen.

Die Erkennungseinheit 10 ist in Sonderfällen in der Elektronikeinheit 9 integriert.

Durch die erfindungsgemäßen Ausführungen wird sichergestellt, daß eine von den Experten der Fahrzeug- und Lenkungshersteller ideal abgestimmte Lenkcharakteristik eines Fahrzeugs dauerhaft erhalten bleibt, selbst wenn sich während der Fahrzeuglebensdauer Fahrwerkscharakteristiken (z. B. durch Reifenwechsel, Stoßdämpfertausch etc.) ändern sollten.

### Bezugszeichen

- 1: Zahnstangenlenkung
- 2: Eingangswelle
- 3: Lenksäule
- 4: Lenkhandrad
- 5: Lenkschubstange
- 6: Lenkschubstange
- 7: Elektromotor
- 8: Erfassungseinheit
- 9: Elektronikeinheit
- 10: Erkennungseinheit

## Patentansprüche

1. Elektrisch unterstützte Hilfskraftlenkung für Kraftfahrzeuge, mit folgenden Merkmalen:
- eine Eingangswelle (2) steht mit einem Lenkhandrad (4) in Wirkverbindung, zur Übertragung eines für das Lenken von zu lenkenden Rädern erforderlichen Lenkdrehmomentes,
- ein Ausgangsglied steht mit den zu lenkenden Rädern in Wirkverbindung,
- durch einen Elektromotor (7) kann eine Hilfskraft auf die Eingangswelle (2) oder das Ausgangsglied ausgeübt werden,
- eine Erfassungseinheit (8) dient zum Erfassen der Richtung und der Stärke eines auf die Eingangswelle (2) wirkenden Lenkdrehmomentes und anderer lenkungsspezifischer Parameter,
- eine Elektronikeinheit (9) dient zum Verarbeiten der lenkungsspezifischen Parameter und zum Steuern des Elektromotors (7),
**gekennzeichnet durch** folgende Merkmale:
- die Hilfskraftlenkung weist eine Erkennungseinheit (10) zum Ermitteln der die Lenkcharakteristik beeinflussender Kennwerte mehrerer Ausstattungsvarianten eines Fahrzeuges auf,
- mehrere diesen ermittelten Kennwerten entsprechende Lenkcharakteristiken unterschiedlicher Ausstattungsvarianten des Fahrzeuges sind in der Elektronikeinheit (9) abgelegt,
- die Hilfskvaftlenkung weist Mittel auf, diedie passende Lenkcharakteristik für die jeweils vorhandene Ausstattungsvariante des Fahrzeuges zum angepaßten Steuern des Elektromotors (7) aktivieren.

2. Elektrisch unterstützte Hilfskraftlenkung nach Anspruch 1, **dadurch gekennzeichnet, daß** die Kennwerte für die jeweils vorhandene Ausstattungsvariante des Fahrzeuges Werte für die spezifische Vorderachslast des Fahrzeuges oder die jeweils den unterschiedlichen Vorderachslasten zugeordneten Fahrwerksfedern enthalten.

3. Elektrisch unterstützte Hilfskraftlenkung nach einem der Ansprüche 1 oder 2, **dadurch gekennzeichnet, daß** die Lenkcharakteristik beeinflussenden Kennwerte für die jeweils vorhandene Ausstattungsvariante des Fahrzeuges Werte für die Reifencharakteristik des Fahrzeuges enthalten.

4. Elektrisch unterstützte Hilfskraftlenkung nach Anspruch 3, **dadurch gekennzeichnet, daß** die Werte für die Reifencharakteristik des Fahrzeuges unter anderem Angaben über Reifenschräglauf-Steifigkeit und/oder Kraftverformungsverhalten und/oder Kennwerte bestimmter Reifentypen enthalten.

5. Elektrisch unterstützte Hilfskraftlenkung nach einem der Ansprüche 3 und 4, **dadurch gekennzeichnet, daß** mehrere verschiedene Reifenausführungen, deren wichtigste Fahreigenschaften vergleichbar sind, in charakteristischen Gruppen zusammengefaßt sind.

6. Elektrisch unterstützte Hilfskraftlenkung nach einem der Ansprüche 1 bis 5, **dadurch gekennzeichnet, daß** die Kennwerte in die Erkennungseinheit (10) durch eine Barcode-Kennung einlesbar sind.

7. Elektrisch unterstützte Hilfskraftlenkung nach einem der Ansprüche 1 bis 6, **dadurch gekennzeichnet, daß** die Elektronikeinheit (9) mit einer Fahrzeugschnittstelle korrespondiert, an die eine fahrzeugexterne Erkennungseinheit (10) angeschlossen werden kann.

8. Elektrisch unterstützte Hilfskraftlenkung nach einem der Ansprüche 1 bis 6, **dadurch gekennzeichnet, daß** die Erkennungseinheit (10) in der Elektronikeinheit (9) integriert ist.

## Claims

1. Electrically assisted power steering system for motor vehicles, having the following features:
- an input shaft (2) is operatively connected to a steering wheel (4) in order to transmit a steering torque which is necessary for steering wheels which are to be steered,
- an output element is operatively connected to the wheels to be steered,
- an auxiliary force can be applied to the input shaft (2) or the output element by means of an electric motor (7),
- a sensing unit (8) is used to sense the direction and the strength of a steering torque acting on the input shaft (2), and other steering-specific parameters,
- an electronic unit (9) is used to process the steering-specific parameters and to control the electric motor (7),
- **characterized by** the following features:
- the power steering system has a detection unit (10) for determining the characteristic values of a plurality of equipment variants of a vehicle which influence the steering characteristic,
- a plurality of steering characteristics, corresponding to these determined characteristic values, of different equipment variants of the vehicle are stored in the electronic unit (9),
- the power steering system has means which activate the suitable steering characteristic for the respectively present equipment variant of the vehicle in order to control the electric motor (7) in an adapted fashion.

2. Electrically assisted power steering system according to Claim 1, **characterized in that** the characteristic values for the respectively present equipment variant of the vehicle contain values for the specific front axle load of the vehicle or the chassis springs respectively assigned to the different front axle loads.

3. Electrically assisted power steering system according to one of Claims 1 or 2, **characterized in that** characteristic values which influence the steering characteristic, for the respectively present equipment variant of the vehicle, contain values for the tyre characteristic of the vehicle.

4. Electrically assisted power steering system according to Claim 3, **characterized in that** the values for the tyre characteristic of the vehicle contain, inter alia, data on tyre slip angle rigidity and/or force deformation behaviour and/or characteristic values of specific tyre types.

5. Electrically assisted power steering system according to one of Claims 3 and 4, **characterized in that** a plurality of different designs of tyres whose most important driving properties are comparable are combined in characteristic groups.

6. Electrically assisted power steering system according to one of Claims 1 to 5, **characterized in that** the characteristic values can be read into the detection unit (10) by means of a bar-code reader.

7. Electrically assisted power steering system according to one of Claims 1 to 6, **characterized in that** the electronic unit (9) corresponds to a vehicle interface to which a vehicle-external detection unit (10) can be connected.

8. Electrically assisted power steering system according to one of Claims 1 to 6, **characterized in that** the detection unit (10) is integrated in the electronic unit (9).

## Revendications

1. Direction électriquement assistée destinée à des véhicules ayant les caractéristiques suivantes :
- un arbre d'entrée (2) se trouve en liaison active avec un volant de direction (4) pour transmettre le couple de déviation nécessaire pour dévier les roues à dévier,
- un élément de sortie se trouve en liaison active avec les roues à dévier,
- une force auxiliaire peut être exercée sur l'arbre d'entrée (2) ou l'élément de sortie à l'aide d'un moteur électrique (7),
- un module de détection (8) sert à détecter la direction et l'intensité d'un couple de déviation qui agit sur l'arbre d'entrée (2) ainsi que d'autres paramètres spécifiques à la direction,
- un module électronique (9) sert à traiter les paramètres spécifiques à la direction et à commander le moteur électrique (7),
**caractérisée par** les caractéristiques suivantes :
- la direction assistée présente un module d'identification (10) destiné à déterminer les paramètres de plusieurs variantes d'équipement d'un véhicule qui influencent la caractéristique de déviation,
- plusieurs caractéristiques de déviation correspondant à ces paramètres déterminés de différentes variantes d'équipement du véhicule sont enregistrées dans le module électronique (9),
- la direction assistée présente des moyens qui activent la caractéristique de déviation appropriée en fonction de la variante d'équipement présente du véhicule en vue de commander le moteur électrique (7) de manière appropriée.

2. Direction électriquement assistée selon la revendication 1, **caractérisée en ce que** les paramètres pour la variante d'équipement présente du véhicule contiennent des valeurs pour la charge spécifique de l'essieu avant du véhicule ou des ressorts de train à chaque fois associés aux différentes charges de l'essieu avant.

3. Direction électriquement assistée selon l'une des revendications 1 ou 2, **caractérisée en ce que** les paramètres qui influencent la caractéristique de déviation pour la variante d'équipement présente du véhicule contiennent des valeurs pour les caractéristiques des pneumatiques du véhicule.

4. Direction électriquement assistée selon la revendication 3, **caractérisée en ce que** les valeurs pour les caractéristiques des pneumatiques du véhicule contiennent ente autres des indications sur la rigidité des pneumatiques en position inclinée et/ou sur le comportement de déformation sous l'effet d'une force et/ou des paramètres de certains types de pneumatiques.

5. Direction électriquement assistée selon l'une des revendications 3 et 4, **caractérisée en ce que** plusieurs exécutions différentes de pneumatiques dont les propriétés de déplacement les plus importantes sont comparables sont regroupées en groupes caractéristiques.

6. Direction électriquement assistée selon l'une des revendications 1 à 5, **caractérisée en ce que** les paramètres dans le module d'identifcatïon (10) peuvent être lus à l'aide d'une identification par code à barres.

7. Direction électriquement assistée selon l'une des revendications 1 à 6, **caractérisée en ce que** le module électronique (9) communique avec une interface du véhicule à laquelle peut être raccordé un module d'identification (10) externe au véhicule.

8. Direction électriquement assistée selon l'une des revendications 1 à 6, **caractérisée en ce que** le module d'identification (10) est intégré dans le module électronique (9).
